# EUROPEAN PATENT SPECIFICATION

(11) **EP 2 158 472 B1**
(45) Date of publication and mention of the grant of the patent: **01.12.2010**
(21) Application number: 08750693.7
(22) Date of filing: 23.05.2008
(51) Int. Cl.: G01N 21/35

(54) **A METHOD FOR THE ONLINE ANALYSIS OF A VAPOUR PHASE PROCESS STREAM**
VERFAHREN ZUR ONLINE-ANALYSE EINES GASPHASEN-PROZESSSTROMS
PROCÉDÉ D'ANALYSE EN LIGNE D'UN FLUX DE TRAITEMENT EN PHASE VAPEUR

(30) Priority: 15.06.2007 EP 07252448
(43) Date of publication of application: 03.03.2010
(73) Proprietor: BP Chemicals Limited, Sunbury-on-Thames, Middlesex TW16 7BP (GB)
(72) Inventor: LIGHTOWLERS, David, East Yorkshire HU12 8JN (GB); THOMSON, Alasdair, Iain, East Yorkshire HU15 1JF (GB)
(74) Representative: Wilson, Nicola Ann
(86) International application number: PCT/GB2008/001778
(87) International publication number: WO 2008/152351

(56) References cited:
- EP-A- 0 801 299
- EP-A- 1 306 129
- WO-A-96/11400
- US-A- 5 082 985
- US-A- 5 452 232
- US-A- 6 072 576
- US-A1- 2005 158 865

## Description

This invention relates to the on-line analysis of vapour phase process streams in the steam reforming of hydrocarbons utilising near infra-red spectroscopy (NIR).

Synthesis gases for the production of chemicals such as methanol customarily have been derived from the steam reforming of a hydrocarbon, typically naphtha or natural gas in the presence of a catalyst. The synthesis gas produced by the steam reforming reaction comprises a mixture of carbon monoxide, hydrogen and carbon dioxide. Generally, the molar ratio of carbon monoxide : hydrogen produced is not optimum for use in downstream chemical processes such as the production of methanol. Accordingly, it is normal practice to remove the carbon dioxide co-produced in the reforming reaction and recycle a desired quantity back to the reformer. The addition of carbon dioxide to the reformer feed alters the carbon monoxide : hydrogen molar ratio. Careful control of the amount of recycled carbon dioxide allows a desired carbon monoxide : hydrogen ratio to be achieved. In conventional practice, separation of carbon dioxide is achieved by absorption stripping with a solvent, typically aqueous alkanolamines, followed by compression to reach the necessary pressure for recycle back to the reformer. It would be advantageous if the amount of carbon dioxide produced in the steam reforming reaction could be tailored or minimised.

The feed components to a steam reforming reaction are water (steam), hydrocarbon and optionally carbon dioxide. The feed components are typically pre-heated to a temperature of at least 500 °C and fed to the reformer at a pressure of at least 15 barg. Under these conditions, the feed components are present as gases.

A conventional vapour phase analytical technique is gas chromatography. However, when gas chromatography is employed, it has been found that condensation of some of the components, such as steam, can occur which makes it difficult to obtain compositional data of acceptable precision. It would therefore be highly desirable to maintain the process stream in the vapour phase during analysis. However, it would be undesirable to perform analysis on process streams of very high temperature, such as the temperatures employed in a steam reformer, since analytical equipment which can withstand such temperatures may not be readily available, or may be expensive.

US-A-5,082,985 discloses a process for cracking hydrocarbons in the vapour phase in the presence of steam for example in the manufacture of ethylene and propylene which uses an infrared spectrophotometer to analyse and control the hydrocarbons feeding a cracking furnace and thus the yields as a function of this analysis. The chemical process is industrial steam-cracking in which the space time yield of the products is controlled with the help of near infrared absorbance measurements of a mixture of hydrocarbons feeding a cracking tube in the wavelength range 0.8 to 2.6 microns using the Beer-Lambert law and statistical methods such as multi linear regressions determined during a calibration procedure beforehand - the feedstock comprises e.g. naphtha, light gasolines or gaseous hydrocarbons such as alkanes including methane. The temperature of the reaction mixture at the entry of the radiation zone of the furnace is in the range of 400-700°C and the pressure in the cracking tube at the exit of this zone is from 120kPa to 240 kPa.

The infrared spectrophotometer may be arranged close to the duct feeding the furnace with a hydrocarbon mixture or to the storage vessel for this mixture, or at a greater or lesser distance from these. In this case, these measurements are advantageously performed directly in real time, that is to say on line in the duct for feeding the furnace with a hydrocarbon mixture, or in the space for storing this mixture. It is also possible to install a system for sampling the mixture of hydrocarbons to be cracked, comprising either a manual system for sampling the mixture of hydrocarbons to be cracked, comprising either a manual device consisting essentially of a lock chamber equipped with stopcocks, or an automatic device governed by programmable automation. In this case, this system may be arranged in the duct for feeding the furncae with a mixture of hydrocarbons, or in the storage vessel for this mixture. The absorbance measurements may also be carried out in non-real time, that is to say in delayed time.

US-A-5,082,985 further discloses that the variations in composition of the feedstock containing the mixture of hydrocarbons to be cracked which typically are relatively rapid should be accounted for by allowing the conditions of the cracking reaction such as temperature and pressure in the cracking tube to be varied so as to compensate these composition changes and thus deliver a constant yield of the desired product (e.g. an olefin).

Accordingly, the present invention provides a method for the on-line analysis of a process stream, which process stream is a feedstream to or an exit stream from a steam reformer, which process stream has a temperature of at least 200°C, the components of which process stream are in the vapour phase, which method comprises:
(a) taking a slipstream from the process stream;
(b) cooling the slipstream to a temperature above its dew point;
(c) analysing the cooled slipstream by near infra-red (NIR) spectroscopy to obtain a spectrum characterising NIR-absorbing components of the process stream; and
(d) correlating the spectrum obtained to established calibration models from NIR spectroscopy using chemometric techniques to determine the concentration of, and/or to determine the partial pressure of one or more of the NIR-absorbing components of the process stream.

Typically, in the steam reforming of a hydrocarbon, the components: steam, hydrocarbon and optionally carbon dioxide are fed to a reformer at high temperature and pressure. The hydrocarbon may be, for example naphtha or natural gas. Natural gas predominantly comprises methane but may also contain smaller quantities of lower aliphatic hydrocarbons such as ethane and propane. Thus, the process stream may comprise the components steam, methane and carbon dioxide. The carbon dioxide may be from a carbon dioxide-containing recycle stream or from any other source. Advantageously, the slipstream may be taken from the feedstream to the reformer at a point subsequent to the tie-in of a carbon dioxide recycle feed.

The steam reforming reaction produces an exit stream comprising carbon monoxide, hydrogen, unconverted hydrocarbon and carbon dioxide. Thus, the process stream may comprise the components carbon monoxide, hydrogen, methane and carbon dioxide. Typically, in commercial practice, carbon dioxide is separated from the exit stream and at least a portion of the carbon dioxide is recycled back to the reformer. Advantageously, the slipstream may be taken from the exit stream from the reformer at a point prior to separation of carbon dioxide from the exit stream.

The steam reformer can be any suitable reformer unit, much as those available commercially, and may be a single-pass reformer or a two-stage reformer. Typically, the reformer is a fired furnace containing parallel tube banks filled with a conventional steam reforming catalyst such as alumina supported nickel oxide.

In the method of the present invention, the components of the process stream are in the vapour phase but the components may also be at pressure. The temperature and pressure of the process stream will depend upon the nature of the steam reforming process. The method of the present invention is suitable for analysing feed streams to and/or exit streams from a steam reformer which have temperatures of at least 200 °C, such as 200 to 500 °C, for example 200 to 350 °C. The process stream may be at atmospheric pressure or higher, for example, at a pressure of at least 10 barg, such as in the range 10 barg to 100 barg.

The slipstream consists of a portion of the process stream. The volume of the slipstream is not critical; however, the speed at which cooling of the slipstream can be carried out will increase with decreasing slipstream volume. Faster cooling of the slipstream may allow the method of the present invention to be carried out more frequently.

Cooling of the slipstream may be effected by air-cooling. Alternatively, cooling of the slipstream may be effected by the use of a water jacket.

By cooling the slipstream to a temperature above its dew point, i.e. the temperature at which components of the slipstream would begin to condense, the components of the slipstream are maintained in the vapour phase. Thus, the present invention allows the determination of compositional data of high precision, since condensation of components during analysis is avoided.

In practice, a slipstream is suitably cooled to a temperature of at least 20°C above the dew point of the slipstream to avoid the formation of cold spots in the stream. Suitably, the slipstream is maintained at a temperature in the range 200 to 300°C.

Near infra-red (NIR) spectroscopic techniques can be used to characterise molecules which absorb in the near infra-red portion of the spectrum. NIR spectroscopy permits both qualitative and quantitative analyses. NIR analysers are available commercially. The principal components of a NIR analyser include a detector, a light source, a means of transferring the light signal to the detector and a spectrometer. The detector is coupled to the means for transferring the light signal to the light source and the spectrometer.

Light of wavelength 10000 to 4000 cm⁻¹ is transmitted to the detector by any suitable means known in the art. Typically, such transfer means include fibre optic cables, for example, low OH silica fibre optic cables. Suitably, for use at high temperatures, the fibre optic cables are coated with a coating that is not susceptible to degradation at temperatures above 200°C. For example, the fibre optic cables may be coated with a polyimide material, or with a metal, such as gold.

The source of light is not deemed critical and may be, for example, a quartz halogen light source or near infra-red light emitting diodes.

Analysis of the slipstream is conducted in a detector which operates in the near infra-red region (10000 cm⁻¹ to 4000 cm⁻¹).

For use in the method of the present invention, wherein the components are in the vapour phase, it is preferred that a detector of the flow cell type is employed. Flow cells are available commercially, for example, from Specac Limited.

The choice of the NIR flow cell should be such that analysis of the components can be achieved under the temperature and pressure conditions of the cooled slipstream. For example, the flow cell may be capable of being electronically heated to a temperature above the dew point of the slipstream. NIR flow cells suitable for use in the method of the present invention include the Typhoon-T cell (Specac Limited).

Suitably, the body of the flow cell is made of a high quality stainless steel, such as stainless steel grade 316L, duplex stainless steel or Hastelloy C.

Suitably, the cell windows are comprised of a material which is transparent in the near infra-red, is chemically resistant and mechanically robust under the conditions of the cooled slipstream. A suitable cell window material is, for example, sapphire.

The cell windows are adhered to the body of the flow cell by a sealing material which is capable of withstanding the temperature and pressure of the cooled slipstream. For example, appropriate epoxy based sealants may be employed.

The cell pathlength used is dependent upon the specific pressure and temperature of the components to be analysed. Increasing the intensity of a spectrum results in a non-linear correlation between absorption strength and concentration. A non-linear correlation is undesirable as it may give rise to false analysis results. Suitably, therefore, the spectrum of an analysed component has an absorption of less than 1.5 absorption units.

The intensity of a spectrum increases with pressure. Thus, as the pressure of the components to be analysed increases, the cell pathlength should be correspondingly decreased. For example, where the pressure of the components to be analysed is in the range 12 to 25 barg, the cell pathlength may be in the range 5 to 10 cm. Typically, feedstreams to and exit streams from a natural gas steam reformer are at approximately 17 barg pressure, thus, a cell pathlength in the range 7.0 to 8.0 cm, such as 7.5 cm will allow quantification of steam, methane, carbon dioxide and other components absorbing in the near infra-red.

Many types of NIR spectrometer are commercially available and may be employed in the method of the present invention. For example, the NIR spectrometer may be a Fourier Transform infra-red spectrometer (FTIR spectrometer) or a diode array spectrometer. As is well known in the art, operation of a FTIR spectrometer at high resolution provides distortion free spectra whilst operation at low resolution allows a more frequent analysis of the components of a process stream. Suitably, the frequency of measurement should be effective to enable process control to be achieved. Using an FTIR spectrometer, it has been found that a resolution in the range 0.1 to 2 cm⁻¹ enables distortion free spectra to be achieved at a frequency of approximately thirty seconds. However, the use of resolutions above 4 cm⁻¹ such as in the range 4 to 16 cm⁻¹ will enable faster response times to be achieved.

The spectral region where water, methane and carbon dioxide can be quantified is 7500 to 4800 cm⁻¹.

The spectrum obtained is recorded in the NIR spectrometer. The spectrum is correlated to reference data of the process stream components using chemometric techniques to simply compute a direct value for the concentration of each of the components analysed and/or the partial pressure of each component analysed. Techniques that may be used include partial least squares (PLS), multiple linear regression (MLR) and principal component regression (PCR). Software for PLS type analysis is commercially available, for example, GRAMS software by Galactic Limited and MATLAB by Mathsoft Inc. MATLAB may also be used for MLR and PCR type analyses.

Typically, in the steam reforming of natural gas, the feedstream to a steam reformer will comprise methane, carbon dioxide and steam. Calibration mixtures can be generated off-line by a flow blending technique. In the flow blending technique, the gaseous components are blended with a liquid component under the desired pressure and heated to the desired temperature, to form a blended vapour mixture. The vapour mixture is then passed through a NIR flow cell to generate spectra. Control of the liquid and gas flows may be by means of mass flow controllers. The liquid may be fed from a stainless steel bottle which has been pressurised with helium to avoid pulsation of the flow. The vapour return from the NIR flow cell is cooled and the liquid condensate collected in a knock out bottle. The gas can then be used to control the system pressure before being sent to vent. The NIR spectra generated from the vapour mixtures are then used to establish the calibration models.

In addition to the off-line calibration data, the accuracy of the calibration model may be verified and/or the model improved by taking samples from process streams and analysing the samples by standard analytical techniques such as gas chromatography. Sampling of vapour phase process streams may be carried out by employing a stainless steel bottle of suitable capacity such as 300 ml. Prior to use, the bottle is pressure purged with an inert gas which is not present in the process stream to be analysed. The choice of inert gas is also dependent upon the chromatography. Suitably, the inert gas may be krypton. In addition, a small volume of solvent (about 5ml) is injected into the bottle via septum. This is necessary in order to quantitatively wash out the sample components that condense onto the inner walls of the bottle. Again the solvent used must not be in the process and must be miscible with all condensed components. In the case of a reformer feedstream, methanol is suitable as the solvent. An internal standard may be present in the methanol to aid quantitation. When installed on the plant the bottle is opened up to the process very briefly (approx 0.5 second). This gives supersonic sample flows into the bottle to mitigate loss of the inert gas or solvent. The bottle can then be removed from the plant and the gas and/or liquid contents analysed off-line by gas chromatography. Any liquid contained in the bottle should be removed and analysed by gas chromatography. Similarly, the gas is analysed by gas chromatography. From the dilution of the krypton that has occurred the volume of sample that was actually collected can be calculated. The number of moles of each component in each phase is then calculated and this readily allows the vapour concentrations in vol% to be determined. This data can then be used to verify and/or improve the accuracy of the calibration model.

The method of the present invention may be employed to determine the concentration of one or more of the NIR-absorbing components of a process streams fed to or exiting from a steam reformer.

Alternatively, the method of the present invention may be employed to determine the partial pressure of one or more of the NIR-absorbing components of a process stream fed to or exiting from a steam reformer.

Where the process stream comprises water, methane and carbon dioxide, the obtained spectrum is correlated to reference data using chemometric techniques to determine the concentration of one or more of water, methane and carbon dioxide. Once such compositional data is known, if necessary, the flow rates of the feed components may be adjusted, thereby improving the efficiency of the process.

Alternatively, the obtained spectrum for water, methane and carbon dioxide may be correlated to reference data using chemometric techniques to determine the partial pressure of one or more of water, methane and carbon dioxide. Some gases such as hydrogen and nitrogen have no dipole and therefore do not absorb infra-red radiation. Consequently, these gases are not analysable by NIR. However, nitrogen may be present in the feed stream to a reformer and hydrogen is present in the exit stream from a reformer. Conventionally, chemical plants, including reformers have pressure detectors associated therewith. These pressure detectors, such as transducers, determine the total gas pressure of a process stream. Thus, by using the method of the present invention, the sum of the partial pressures of the NIR-absorbing components of a process stream may be determined. A comparison of the pressure value determined by the NIR method of the present invention with the absolute gas pressure data from, for example, a pressure transducer, will enable the pressure of the remaining gaseous components, for example, nitrogen and hydrogen, to be determined. This is of particular value in situations where the amount of nitrogen present in the natural gas changes, which may occur, for example, if the supply source of natural gas is changed.

One advantage of the method of the present invention is the ability to rapidly determine compositional information of a vapour phase process stream, at process pressure and at a temperature above the dew point of the process stream. In practicing the invention, measurement of the concentrations of steam and/or hydrocarbon, such as methane, and/or carbon dioxide in the cooled slipstream according to the present invention can be made continually, for example, as often as every thirty seconds.

Where the method of the present invention is operated continually, it is preferred that the temperature to which the slipstream is cooled remains constant. This is advantageous, since the intensity of the spectra obtained will be unaffected by changing temperature, thereby simplifying the correlation of the spectra to established calibration models.

Further, continual operation of the method of the present invention allows the method to be suitable for effecting process control. For example, by continually monitoring the concentration of unconverted methane in the exit stream from a reformer, the flow rate (concentration) of methane to the reformer may be adjusted to maximise the amount of carbon monoxide produced, thereby improving the efficiency of the reforming process.

Accordingly, the present invention further provides a method for effecting process control in a steam reforming process, said process having a process stream which is a feedstream to or an exit stream from a steam reformer, wherein the process stream has a temperature of at least 200°C, the components of which process stream are in the vapour phase, wherein said method comprises:
(a) taking a slipstream from the process stream;
(b) cooling the slipstream to a temperature above its dew point;
(c) analysing the cooled slipstream by near infra-red (NIR) spectroscopy to obtain a spectrum characterising the NIR-absorbing components of the stream; and
(d) correlating the spectrum obtained to established calibration models from NIR spectroscopy using chemometric techniques to determine the concentration of, and/or to determine the partial pressure of one or more of the NIR-absorbing components of the process stream; and
(e) adjusting the concentration of at least one of the components in the feed stream, in response to the determined concentcation(s) and/or partial pressure(s).

Process control of a chemical process, based on the information obtained from the near infra-red analysis of a slipstream from the feed stream to and/or exit streams from a steam reformer can be either manual or automatic. Preferably, the data obtained from the near infra-red analysis is fed to a computerised control unit, which automatically adjusts the feed components to the steam reformer to achieve the desired flow rates for the components.

Alternatively, the data may be fed to a display unit and is interpreted by an operator who adjusts the flow rates of the feed components manually.

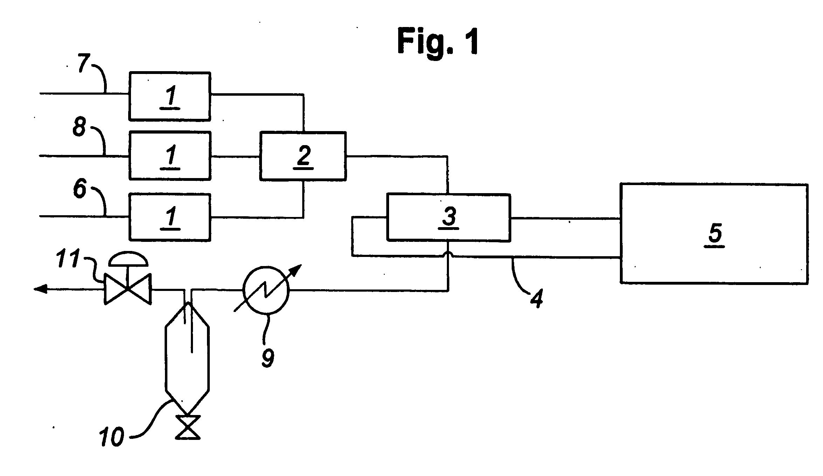

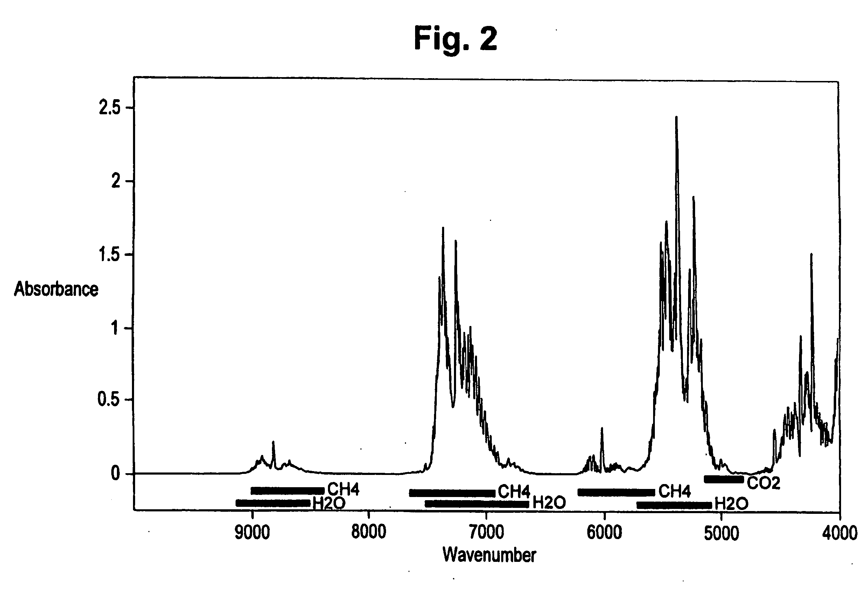

The method of the present invention will now be illustrated by the following nonlimiting example and with reference to Figures 1 and 2. Figure 1 represents in schematic form, apparatus suitable for use in establishing calibration models of vapour phase mixtures generated by flow blending. Figure 2 shows a NIR spectrum of a vapour phase mixture of carbon dioxide, methane and waster.

The apparatus comprises thermal mass flow controllers (1), a controlled evaporator mixer (CEM) (2), a NIR flow cell (3), fibre optic cables (4) and a NIR spectrometer (5).

In use, a component in the liquid phase is fed via line (6) to a heated controlled evaporator mixer (2) where it is evaporated to form a vapour. Gaseous components are fed via lines 7 and 8 to the heated controlled evaporator mixer (2) where they are mixed with the vapourised liquid. The flows of the liquid and the gaseous components to the heated controlled evaporator mixer (2) may be regulated by thermal mass flow controllers (1). The vapour mixture produced in the heated controlled evaporator mixer (2) is passed to the NIR flow cell (3). Effluent from the NIR flow cell (3) is passed through a heat-exchanger (9) and vented via a condenser (10), which knocks out liquids and a pressure regulator (11), which controls the pressure in the system. The NIR flow cell (3) is coupled by fibre optic cables (4) to a NIR spectrometer (5). The vapour mixture in the NIR flow cell (3) is analysed by the NIR spectrometer (5) using multiple scans at variable resolution between 10000 and 4000 cm-1 and employing the flow cell under nitrogen or a fibre loop as reference.

### Establisbing calibration models of the concentration of steam, methane and carbon dioxide in a mixture thereof

The apparatus arrangement shown in Fig. 1 was used to generate NIR spectra of calibration mixtures of carbon dioxide, water vapour and methane. The apparatus comprised thermal mass flow controllers (1) and heated controlled evaporator mixer (2) manufactured by Bronkhurst (UK) Ltd. The NIR spectrometer (5) was a Bruker Matrix F FTNIR spectrometer (Bruker Optics Ltd) having an integral mechanical multiplexer and fitted with a thermoelectrically cooled InGaAs detector and a quartz beamsplitter. The NIR spectrometer (5) was connected to the NIR flow cell (3) by low OH silica fibre optics (200 micron core/280 micron cladding, 0.29 numerical aperture, polyimide coated rated to 350 °C, available from Sentronic GmbH). The NIR flow cell used was a stainless steel Typhoon T cell (SPECAC Ltd) having sapphire windows, a pathlength of 7.5cm and rated to 50 bar and 300 °C. The flow cell and vapour lines were electrically heated to above the dew point of the vapour mixtures.

Calibration mixtures of water vapour, methane and carbon dioxide were prepared as follows. Water (0 to 10g/hr) was vaporised, mixed with methane (0 to 3nl/hr) and carbon dioxide (0 to 3nl/hr) in the controlled evaporator mixer and fed to the flow cell at 200 to 280 °C and 15 to 20 bara total pressure. This produced vapour mixtures containing 8 to 12 bara water vapour, 2 to 6 bara methane, and 1 to 4 bara carbon dioxide. NIR spectra of the mixtures were recorded between 10000 and 4000 wavenumbers at 2 wavenumber resolution using the flow cell under nitrogen at the measuring temperature as reference.

A sample spectrum showing regions of carbon dioxide (2.60 bara), methane (3.64 bara) and water vapour (10.81 bara) absorption at total pressure 17.05 bara and 240 °C is shown in Figure 2. (Pure component spectra can be found in commercial libraries such as that published by the Pacific Northwest National Laboratory, US Department of Energy, Richland. Washington). The data obtained from the generated NIR spectra was used to establish the calibration models. Partial least squares calibration models were built for methane, water, carbon dioxide and temperature using PLSplus/IQ chemometrics software (Thermo Electron Corporation) using spectral regions avoiding excessive water absorption (9500 to 7400, 7100 to 5520 and 5160 to 4925 wavenumbers).

### Example 1

A slipstream from a steam reformer feedstream comprising steam, carbon dioxide and methane at a temperature of approx. 278°C and at a pressure of approx. 17 barg is air-cooled to a temperature of 250 to 260°C and is subsequently analysed by recording NIR spectra between 10000 and 4000 wavenumbers at 2 wavenumber resolution at intervals of 30 seconds using an NIR spectrometer, NIR flow cell and fibre optic cables of the type described above. The partial least squares calibration models are applied to the generated NIR spectra so that the concentration of each of the components, methane, steam and carbon dioxide in the reformer feed stream is determined. In response to the determined concentration of the components methane, steam and carbon dioxide, the concentration of methane in the feedstream to the steam reformer may be adjusted.

## Claims

1. A method for the on-line analysis of a process stream, which process stream is a feedstream to or an exit stream from a steam reformer, which process stream has a temperature of at least 200°C, the components of which process stream are in the vapour phase, which method comprises:
(a) taking a slipstream from the process stream;
(b) cooling the slipstream to a temperature above its dew point;
(c) analysing the cooled slipstream by near infra-red (NIR) spectroscopy to obtain a spectrum characterising NIR-absorbing components of the process stream; and
(d) correlating the spectrum obtained to established calibration models from NIR spectroscopy using chemometric techniques to determine the concentration of, and/or to determine the partial pressure of one or more of the NIR-absorbing components of the process stream.

2. A method according to claim 1 wherein the process stream comprises the components steam, methane and carbon dioxide.

3. A method according to claim 1 wherein the process stream comprises the components carbon monoxide, hydrogen, methane and carbon dioxide.

4. A method according to any one of the preceding claims wherein the process stream further comprises nitrogen.

5. A method according to any one of the preceding claims wherein the temperature of the process stream is in the range 200 to 500 °C.

6. A method according to any preceding claim wherein the slipstream is obtained from the feedstream at a point subsequent to the tie-in of a carbon dioxide recycle feed.

7. A method according to any of claims 1 to 5 wherein the slipstream is obtained from the exit stream at a point prior to the separation of carbon dioxide from the exit stream.

8. A method according to any preceding claim wherein the slipstream is cooled to a temperature of at least 20 °C above the dew point.

9. A method according to any one of the preceding claims wherein the cooled slipstream is maintained at a temperature in the range 200 to 300 °C.

10. A method according to any one of the preceding claims wherein the process stream is at a pressure in the range 10 to 100 barg.

11. A method according to any one of the preceding claims wherein the chemometric technique is selected from partial least squares, multiple linear regression and principal component regression.

12. A method according to any one of the preceding claims wherein the near infra spectroscopy is conducted using an apparatus comprising a NIR spectrometer, fibre optic cables, and a NIR flow cell.

13. A method according to claim 12 wherein the NIR spectrometer is a Fourier Transform infra-red spectrometer.

14. A method according to claim 13 wherein the Fourier Transform infra-red spectrometer is used at a resolution in the range 0.1 to 2 cm⁻¹.

15. A method according to any one of claims 12 to 14 wherein the fibre optic cables are low OH silica fibre optic cables.

16. A method according to any one of claims 12 to 15 wherein the fibre optic cables are coated with a polyimide material or a metal.

17. A method according to any one of claims 12 to 16 wherein the NIR flow cell comprises a stainless steel body and sapphire windows.

18. A method according to any one of claims 12 to 17 wherein the NIR flow cell has a pathlength in the range 5 to 10 cm.

19. A method according to claim 18 wherein the pathlength is in the range 7.0 to 8.0 cm.

20. A method according to any one of the preceding claims wherein the spectrum of an analysed component has an absorption of less than 1.5 absorption units.

21. A method for effecting process control in a steam reforming process, said process having a process stream which is a feedstream to or an exit stream from a steam reformer, wherein the process stream has a temperature of at least 200°C, the components of which process stream are in the vapour phase, wherein said method comprises:
(a) taking a slipstream from the process stream;
(b) cooling the slipstream to a temperature above its dew point;
(c) analysing the cooled slipstream by near infra-red (NIR) spectroscopy to obtain a spectrum characterising the NIR-absorbing components of the stream; and
(d) correlating the spectrum obtained to established calibration models from NIR spectroscopy using chemometric techniques to determine the concentration of, and/or to determine the partial pressure of one or more of the NIR-absorbing components of the process stream; and
(e) adjusting the concentration of at least one of the components in the feed stream, in response to the determined concentration(s) and/or partial pressure(s).

## Patentansprüche

1. Verfahren zur dynamischen Analyse eines Prozessstroms, wobei der Prozessstrom ein Speisestrom zu oder ein Austrittsstrom aus einem Steamreformer ist, wobei der Prozessstrom eine Temperatur von mindestens 200 °C hat, wobei die Komponenten des Prozessstroms in der Dampfphase vorliegen, wobei das Verfahren:
(a) das Entnehmen eines Teilgasstroms aus dem Prozessstrom;
(b) das Abkühlen des Teilgasstroms auf eine Temperatur über seinem Taupunkt;
(c) das Analysieren des abgekühlten Teilgasstroms durch IR-Spektroskopie im nahen Infrarot (NIR) unter Erhalt eines Spektrums, das die NIR-absorbierenden Komponenten des Prozessstroms charakterisiert; und
(d) das Korrelieren des erhaltenen Spektrums mit etablierten Kalibrierungsmodellen aus der NIR-Spektroskopie unter Verwendung chemometrischer Techniken, um die Konzentration und/oder den Partialdruck einer oder mehrerer der NIR-absorbierenden Komponenten des Prozessstroms zu bestimmen,
umfasst.

2. Verfahren nach Anspruch 1, wobei der Prozessstrom die Komponenten Dampf, Methan und Kohlendioxid umfasst.

3. Verfahren nach Anspruch 1, wobei der Prozessstrom die Komponenten Kohlenmonoxid, Wasserstoff, Methan und Kohlendioxid umfasst.

4. Verfahren nach einem der vorstehenden Ansprüche, wobei der Prozessstrom ferner Stickstoff umfasst.

5. Verfahren nach einem der vorstehenden Ansprüche, wobei die Temperatur des Prozessstroms im Bereich von 200 bis 500 °C liegt.

6. Verfahren nach einem der vorstehenden Ansprüche, wobei der Teilgasstrom aus dem Speisestrom an einem Punkt nach der Anschlussstelle einer Kohlendioxidrücklaufeinspeisung erhalten wird.

7. Verfahren nach einem der Ansprüche 1 bis 5, wobei der Teilgasstrom aus dem Austrittsstrom an einem Punkt vor der Trennung des Kohlendioxids von dem Austrittsstrom erhalten wird.

8. Verfahren nach einem der vorstehenden Ansprüche, wobei der Teilgasstrom auf eine Temperatur von mindestens 20 °C über dem Taupunkt abgekühlt wird.

9. Verfahren nach einem der vorstehenden Ansprüche, wobei der abgekühlte Teilgasstrom bei einer Temperatur im Bereich von 200 bis 300 °C gehalten wird.

10. Verfahren nach einem der vorstehenden Ansprüche, wobei der Prozessstrom einen Druck im Bereich von 10 bis 100 barg hat.

11. Verfahren nach einem der vorstehenden Ansprüche, wobei die chemometrische Technik aus Partial Least Squares, multipler linearer Regression und Hauptkomponentenregression ausgewählt ist.

12. Verfahren nach einem der vorstehenden Ansprüche, wobei die IR-Spektroskopie im nahen Infrarot unter Verwendung einer Vorrichtung, umfassend ein NIR-Spektrometer, Glasfaserkabel und eine NIR-Durchflusszelle, durchgeführt wird.

13. Verfahren nach Anspruch 12, wobei das NIR-Spektrometer ein Fourier-Transformations-Infrarot-Spektrometer ist.

14. Verfahren nach Anspruch 13, wobei das Fourier-Transformations-Infrarot-Spektrometer bei einer Auflösung im Bereich von 0,1 bis 2 cm⁻¹ verwendet wird.

15. Verfahren nach einem der Ansprüche 12 bis 14, wobei die Glasfaserkabel Glasfaserkabel aus Siliciumdioxid mit geringem OH-Gehalt sind.

16. Verfahren nach einem der Ansprüche 12 bis 15, wobei die Glasfaserkabel mit einem Polyimidmaterial oder einem Metall beschichtet sind.

17. Verfahren nach einem der Ansprüche 12 bis 16, wobei die NIR-Durchflusszelle einen Edelstahlkörper und Saphirglasfenster umfasst.

18. Verfahren nach einem der Ansprüche 12 bis 17, wobei die NIR-Durchflusszelle eine Weglänge im Bereich von 5 bis 10 cm hat.

19. Verfahren nach Anspruch 18, wobei die Weglänge im Bereich von 7,0 bis 8,0 cm liegt.

20. Verfahren nach einem der vorstehenden Ansprüche, wobei das Spektrum einer analysierten Komponente eine Absorption von weniger als 1,5 Absorptionseinheiten aufweist.

21. Verfahren zum Bewirken der Prozesskontrolle in einem Steam-Reforming-Verfahren, wobei das Verfahren einen Prozessstrom aufweist, der ein Speisestrom zu oder ein Austrittsstrom aus einem Steamreformer ist, wobei der Prozessstrom eine Temperatur von mindestens 200 °C hat, wobei die Komponenten des Prozessstroms in der Dampfphase vorliegen, wobei das Verfahren:
(a) das Entnehmen eines Teilgasstroms aus dem Prozessstrom;
(b) das Abkühlen des Teilgasstroms auf eine Temperatur über seinem Taupunkt;
(c) das Analysieren des abgekühlten Teilgasstroms durch IR-Spektroskopie im nahen Infrarot (NIR) unter Erhalt eines Spektrums, das die NIR-absorbierenden Komponenten des Prozessstrom charakterisiert; und
(d) das Korrelieren des erhaltenen Spektrums mit etablierten Kalibrierungsmodellen aus der NIR-Spektroskopie unter Verwendung chemometrischer Techniken, um die Konzentration und/oder den Partialdruck einer oder mehrerer der NIR-absorbierenden Komponenten des Prozessstroms zu bestimmen; und
(e) das Einstellen der Konzentration mindestens einer der Komponenten in dem Speisestrom als eine Reaktion auf die bestimmte(n) Konzentration(en) und/oder Partialdruck/-drücke
umfasst.

## Revendications

1. Procédé pour l'analyse en ligne d'un courant de traitement, lequel courant de traitement est un courant d'alimentation vers un reformeur à vapeur, où un courant de sortie qui en provient, lequel courant de traitement a une température de moins 200 °C, dont les composants sont dans la phase vapeur, un tel procédé comprend les étapes consistant à :
(a) prélever un sillage du courant de traitement ;
(b) refroidir le sillage à une température au-dessus de son point de rosée ;
(c) analyser le sillage refroidi par spectroscopie proche infrarouge (NIR) pour obtenir un spectre caractérisant les composants absorbant le NIR du courant de traitement ; et
(d) corréler le spectre obtenu à des modèles d'étalonnage établis à partir de la spectroscopie NIR en utilisant des techniques chimiométriques pour déterminer la concentration en, et/ou déterminer la pression partielle d'un ou plusieurs des composants absorbant le NIR du courant de traitement.

2. Procédé selon la revendication 1, dans lequel le courant de traitement comprend les composants vapeur d'eau, méthane et dioxyde de carbone.

3. Procédé selon la revendication 1, dans lequel le courant de traitement comprend les composants monoxyde de carbone, hydrogène, méthane et dioxyde de carbone.

4. Procédé selon l'une quelconque des revendications précédentes, dans lequel le courant de traitement comprend en outre de l'azote.

5. Procédé selon l'une quelconque des revendications précédentes, dans lequel la température de courant de traitement est dans la gamme de 200 à 500 °C.

6. Procédé selon l'une quelconque des revendications précédentes, dans lequel le sillage est obtenu à partir du courant d'alimentation en un point ultérieur au raccordement d'une charge de recyclage de dioxyde de carbone.

7. Procédé selon l'une quelconque des revendications 1 à 5, dans lequel le sillage est obtenu à partir du courant de sortie en un point antérieur à la séparation entre le dioxyde de carbone et le courant de sortie.

8. Procédé selon l'une quelconque des revendications précédentes, dans lequel le sillage est refroidi à une température d'au moins 20 °C au-dessus du point de rosée.

9. Procédé selon l'une quelconque des revendications précédentes, dans lequel le sillage refroidi est maintenu à une température dans la gamme de 200 à 300 °C.

10. Procédé selon l'une quelconque des revendications précédentes, dans lequel le courant de traitement est à une pression dans la gamme de 10 à 100 barg.

11. Procédé selon l'une quelconque des revendications précédentes, dans lequel la technique chimiométrique est choisie parmi les moindres carrés partiels, la régression linéaire multiple et la régression en composantes principales.

12. Procédé selon l'une quelconque des revendications précédentes, dans lequel la spectroscopie proche infrarouge est conduite en utilisant un appareil comprenant un spectromètre NIR, des câbles à fibre optique et une cellule d'écoulement NIR.

13. Procédé selon la revendication 12, dans lequel le spectromètre NIR est un spectromètre infrarouge à Transformée de Fourier.

14. Procédé selon la revendication 13, dans lequel le spectromètre infrarouge à Transformée de Fourier est utilisé à une résolution dans la gamme de 0,1 à 2 cm⁻¹.

15. Procédé selon l'une quelconque des revendications 12 à 14, dans lequel les câbles à fibre optique sont des câbles à fibre optique en silice pauvre en OH.

16. Procédé selon l'une quelconque des revendications 12 à 15, dans lequel les câbles à fibre optique sont revêtus avec un matériau poly(imide) ou un métal.

17. Procédé selon l'une quelconque des revendications 12 à 16, dans lequel la cellule d'écoulement NIR comprend un corps d'acier inoxydable et des fenêtres en saphir.

18. Procédé selon l'une quelconque des revendications 12 à 17, dans lequel la cellule d'écoulement NIR a une longueur de parcours dans la gamme de 5 à 10 cm.

19. Procédé selon la revendication 18, dans lequel la longueur de parcours est dans la gamme de 7,0 à 8,0 cm.

20. Procédé selon l'une quelconque des revendications précédentes, dans lequel le spectre d'un composant analysé a une absorption inférieure à 1,5 unité d'absorption.

21. Procédé pour effectuer un contrôle de traitement dans un traitement de reformage à la vapeur, ledit traitement comportant un courant de traitement qui est un courant d'alimentation vers un reformeur à vapeur ou un courant de sortie qui en provient, dans lequel le courant de traitement a une température d'au moins 200 °C, dont les composants sont dans la phase vapeur, dans lequel ledit procédé comprend les étapes consistant à :
(a) prélever un sillage du courant de traitement ;
(b) refroidir le sillage à une température au-dessus de sont point de rosée ;
(c) analyser le sillage refroidi par spectroscopie proche infrarouge (NIR) pour obtenir un spectre caractérisant les composants absorbant le NIR du courant de traitement ; et
(d) corréler le spectre obtenu à des modèles d'étalonnage établis à partir de la spectroscopie NIR en utilisant des techniques chimiométriques pour déterminer la concentration en, et/ou déterminer la pression partielle d'un ou plusieurs des composants absorbant le NIR du courant de traitement ; et
(e) ajuster la concentration d'au moins l'un des composants dans le courant d'alimentation, en réponse à la ou aux concentration(s) et/ou pression(s) partielle(s) déterminée(s).
